(19) **Europäisches Patentamt / European Patent Office / Office européen des brevets**

(11) **EP 1 841 252 A2**

(12) # EUROPEAN PATENT APPLICATION

(43) Date of publication:
**03.10.2007 Bulletin 2007/40**

(51) Int Cl.:
*H04Q 7/36* (2006.01)     *H04L 12/56* (2006.01)

(21) Application number: **07006755.8**

(22) Date of filing: **30.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **31.03.2006 KR 20060029754**

(71) Applicant: **Samsung Electronics Co., Ltd.
Suwon-si, Gyeonggi-Do (KR)**

(72) Inventors:
- **Hyon, Tae-In**
  **Suwon-si**
  **Gyeonggi-do (KR)**
- **Park, Dae-Young**
  **Suwon-si**
  **Gyeonggi-do (KR)**
- **Kim, Eun-Ju**
  **Suwon-si**
  **Gyeonggi-do (KR)**
- **Kim, Nak-Myeong**
  **Suwon-si**
  **Gyeonggi-do (KR)**
- **Yun, Sang-Boh**
  **Suwon-si**
  **Gyeonggi-do (KR)**
- **Ahn, Chang-Wook**
  **Suwon-si**
  **Gyeonggi-do (KR)**
- **Oh, Sang-Youn**
  **Suwon-si**
  **Gyeonggi-do (KR)**

(74) Representative: **Grünecker, Kinkeldey,
Stockmair & Schwanhäusser
Anwaltssozietät
Maximilianstrasse 58
80538 München (DE)**

(54) **Method and system for transmitting/receiving data in a communication system**

(57)     A method and system for transmitting and receiving data to prevent Adjacent Channel Interference (ACI) in a Cognitive Radio (CR) communication system are provided, in which a second system using a second frequency band measures a first channel interference that a first frequency band used by a first system causes to the second frequency band, determines a frequency spreading parameter according to the first channel interference, measures a second channel interference that the second frequency band causes to the first frequency band, receives link information from the first system according to the second channel interference, determines a power allocation map according to the link information and transmits and receives data according to the frequency spreading parameter and the power allocation map.

FIG.1

EP 1 841 252 A2

**Description**

**BACKGROUND OF THE INVENTION**

1. Field of the Invention

The present invention relates generally to a communication system, and more particularly to a method and system for transmitting/receiving data to prevent Adjacent Channel Interference (ACI) in a Cognitive Radio (CR) communication system.

2. Description of the Related Art

The provision of services with different Quality of Service (QoS) requirements at high rates to users is an active research area in the next-generation communication system. Particularly, studies are being conducted on providing high-speed services by ensuring mobility and QoS to a Broadband Wireless Access (BWA) communication system such as a Wireless Local Area Network (WLAN) and a Wireless Metropolitan Area Network (WMAN).

The BWA communication system faces the challenging issue of efficient use of resources because a large number of cells share limited resources, such as frequencies, codes, and time slots. Along with the rapid development of wireless communication systems and the emergence of a variety of wireless communication services, there is an increasing demand for radio resources. Yet, there is a problem of spectrum availability due to multiple applications over all of frequencies that can be commercially used. Hence, deployment of a new wireless platform faces a gigahertz spectrum shortage, particularly lower frequency bands. To solve this spectrum shortage, the concept of CR has been introduced, which is a frequency-agile technique for detecting allocated but unused spectrum and efficiently sharing the detected spectrum. The CR technology is likely to be applied to future-generation wireless communications now being studied. A major CR communication system is Institute of Electrical and Electronics Engineers (IEEE) 802.22 Wireless Regional Area Network (WRAN) that aims for data transmission/reception in an unused TeleVision (TV) frequency band using the CR technology.

In the CR communication system, if a primary system wants to use a frequency band that a secondary system now occupies, the secondary system has to immediately give it to the primary system. The primary system is a licensed wireless communication system legally authorized to use the frequency. When the secondary system uses the unused frequency band of the primary system, ACI is produced because of a varying situation between the two systems, that is, because the frequency band is variable. As a result, the two systems suffer from performance degradation due to the ACI.

**SUMMARY OF THE INVENTION**

An aspect of the present invention is to address at least the problems and/or disadvantages and to provide at least the advantages described below. Accordingly, an aspect of the present invention is to provide a method and system for transmitting/receiving data in a communication system.

Another aspect of the present invention is to provide a data transmitting/receiving method and system for preventing ACI to thereby improve system performance in a communication system.

In accordance with an aspect of the present invention, there is provided a method for transmitting and receiving data in a communication system having a first system for providing a communication service in a first frequency band and a second system for providing a communication service in a second frequency band different from the first frequency band. The method includes measuring a first channel interference that the first frequency band causes to the second frequency band; determining a frequency spreading parameter according to the first channel interference; measuring a second channel interference that the second frequency band causes to the first frequency band; receiving link information from the first system according to the second channel interference and determining a power allocation map according to the link information; and transmitting and receiving data according to the frequency spreading parameter and the power allocation map.

In accordance with another aspect of the present invention, there is provided a system for transmitting and receiving data in a communication system having a first system for providing a communication service in a first frequency band and a second system for providing a communication service in a second frequency band different from the first frequency band. The system includes the second system for measuring a first channel interference that the first frequency band causes to the second frequency band, determining a frequency spreading parameter according to the first channel interference, measuring a second channel interference that the second frequency band causes to the first frequency band, receiving link information from the first system according to the second channel interference and determining a power allocation map according to the link information, and transmitting and receiving data according to the frequency spreading parameter and the power allocation map.

## BRIEF DESCRIPTION OF THE DRAWINGS

The above and other objects, features and advantages of certain exemplary embodiments of the present invention will be more apparent from the following detailed description taken in conjunction with the accompanying drawings, in which:

FIG. 1 illustrates the configuration of a CR communication system according to the present invention;
FIGs. 2A and 2B illustrate ACI between a primary system and a secondary system in the CR communication system according to the present invention;
FIG. 3 illustrates a method for determining an adaptive frequency spreading parameter in the CR communication system according to the present invention;
FIG. 4 illustrates a method for determining a subcarrier power allocation map for adaptive time spreading and power reduction in the CR communication system according to the present invention;
FIG. 5 illustrates data combining based on the subcarrier power allocation map in the CR communication system according to the present invention;
FIG. 6 illustrates a transmitter in the CR communication system according to the present invention; and
FIG. 7 illustrates a receiver in the CR communication system according to the present invention.

## DETAILED DESCRIPTION OF THE PREFERRED EMBODIMENTS

The matters defined in the description such as a detailed construction and elements are provided to assist in a comprehensive understanding of preferred embodiments of the invention. Accordingly, those of ordinary skill in the art will recognize that various changes and modifications of the embodiments described herein can be made without departing from the scope and spirit of the invention. Herein, the same drawing reference numerals will be understood to refer to the same elements, features and structures. Also, descriptions of well-known functions and constructions are omitted herein for the sake of clarity and conciseness.

The present invention provides a method and system for transmitting/receiving data in a communication system. While the the present invention will be described below in the context of a Cognitive Radio (CR)-Orthogonal Frequency Division Multiplexing (OFDM)/Orthogonal Frequency Division Multiple Access (OFDMA) system compliant with IEEE 802.22 and IEEE 802.16 (the BWA standard), the data transmitting/receiving method and system are also applicable to other communication systems.

The the present invention provides a method and system for transmitting/receiving data between a transmitter, e.g. Base Station (BS) and a receiver, e.g. Mobile Station (MS) for receiving a communication service from the transmitter in a communication system where when a primary system legally authorized to use predetermined resources, such as a frequency band, does not use the frequency band, a secondary system which is not licensed to the frequency band can occupy the frequency band.

Herein, this communication system is called a CR communication system. The present invention provides a data transmitting/receiving method and system for preventing ACI between a first frequency band in use for the primary system and a second frequency band in use for the secondary system in the CR system. Only the primary system is authorized to use the first and second frequency bands and the secondary system uses the second frequency band only when the primary system does not use the secondary frequency band, as previously stated. For the sake of simplicity, the first frequency band is called a primary MS channel and the secondary frequency band is called a secondary MS channel.

Further, the present invention provides a data transmitting/receiving method and system for preventing ACI caused by the data transmission/reception power of communication systems using different frequency bands. The CR system is proposed as a CR-OFDM/OFDMA communication system being a multi-carrier communication system that performs adaptive frequency spreading and adaptive time spreading and power reduction. While the present invention is described in the context of the CR-OFDM/OFDMA system, the data transmitting/receiving method and system can also be implemented in other communication systems. In addition, while ACI between adjacent primary and secondary MS channels is addressed herein, the data transmitting/receiving method and system are applicable in preventing channel interference between any different frequency bands.

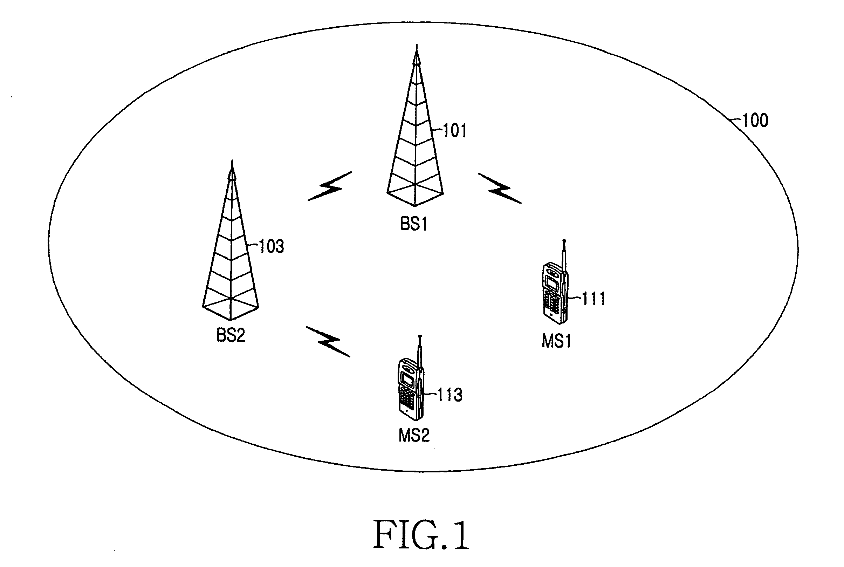

FIG. 1 illustrates the configuration of a CR communication system according to the present invention.

Referring to FIG. 1, a cell 100 is configured in the CR communication system. The cell 100 includes a primary system legally authorized to use a predetermined frequency band and a secondary system that is not authorized but can share the frequency band only when the primary system does not occupy it. The primary system has a BS1 101 as a primary BS and an MS1 111 as a primary MS for receiving a communication service from BS1 101. The secondary system has a BS2 103 as a secondary BS and an MS2 113 as a secondary MS for receiving a communication service from BS2 103.

BS1 101 receives MS location information and Channel State Information (CSI) from MS1 during a communication service to MS 1 111 in the predetermined frequency band. MS2 113 assesses its communication status, for example, it measures interference caused by noise and other interference factors, selects a channel unused by BS 1 and MS1 in the frequency band licensed to the primary system, and requests a maximal power reduction value to BS2 103.

BS2 103 then requests to BS1 101 the link margin between MS1 111 and BS1 101, and BS1 101 notifies BS2 103 of the link margin. BS2 103 determines the requested maximal power reduction value based on the link margin and informs the maximal power reduction value to MS2 113. MS2 113 determines a subcarrier power allocation map for use in adaptive time spreading and power control according to the maximum power reduction value, and also determines an adaptive frequency spreading parameter based on the interference measurement. Then MS2 113 transmits the subcarrier power allocation map and the adaptive frequency spreading parameter to BS2 103.

Upon generation of data to be sent to MS2 113, BS2 103 frequency-spreads the data with the adaptive frequency spreading parameter and performs time spreading and power reduction on the frequency-spread data, prior to transmission. MS2 113 processes the data received from BS2 103 by time despreading and power combining using the subcarrier power allocation map and frequency-despreads the processed data with the adaptive frequency spreading parameter, thereby recovering the data.

In accordance with the present invention, in the secondary system, the transmitter, i.e. BS2 103 performs frequency spreading and time spreading and transmit power reduction using the adaptive frequency spreading parameter and the subcarrier power allocation map received from the receiver, i.e. MS2 113. MS2 113 performs time despreading and transmit power combining and frequency despreading in relation to the frequency spreading and the time spreading and transmit power reduction.

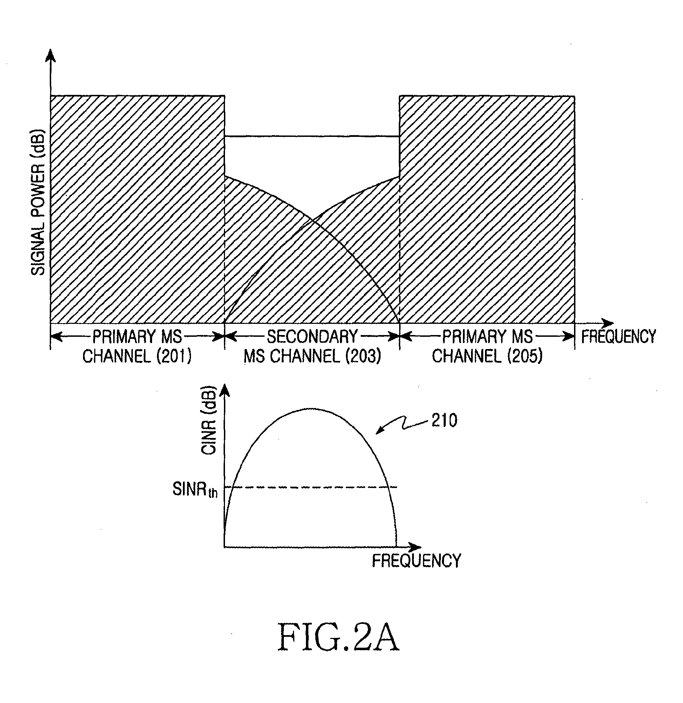

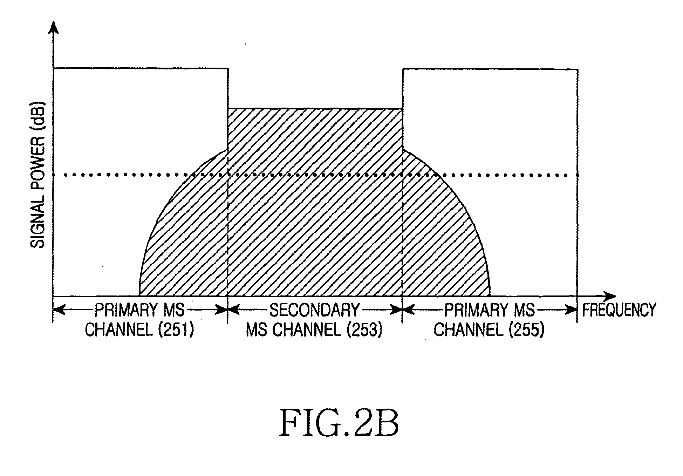

FIGs. 2A and 2B illustrate ACI between the primary system and the secondary system in the CR communication system according to the present invention. FIG. 2A illustrates ACI that the first MS channel used by the primary system causes to the secondary MS channel selected by the secondary system adjacent to the primary MS channel in the predetermined frequency band, and FIG. 2B illustrates ACI that the secondary MS channel causes to the primary MS channel.

Referring to FIG. 2A, when the secondary system uses a secondary MS channel 203 unused by the primary system in a frequency band licensed to the primary system and the primary system uses primary MS channels 201 and 205 neighboring to the secondary MS channel 203, the primary MS channels 201 and 205 cause ACI to the secondary MS channel 203, especially severe ACI in the vicinity of the primary MS channels 201 and 205. As a consequence, the Carrier-to-Interference and Noise Ratio (CINR) 210 of the secondary MS channel 203 between a secondary BS and a secondary MS in the secondary system is rapidly decreased in frequency bands close to the primary MS channels 201 and 205.

The CINR of the frequency bands close to the primary MS channels 201 and 205 is equal to or less than a Signal-to-Interference and Noise Ratio (SINR), i.e. a threshold SINR ($SINR_{th}$) satisfying a target Bit Error Rate (BER) for data transmission/reception between the secondary BS and the secondary MS. Accordingly, the secondary MS measures ACI caused to the secondary MS channel 203 by the primary MS channels 201 and 205 and calculates a CINR using the ACI. Then the secondary MS determines an adaptive frequency spreading parameter for adaptive frequency spreading in accordance with the CINR and transmits the adaptive frequency spreading parameter to the secondary BS. The manner in which the adaptive frequency spreading parameter is computed will be described later in detail herein.

Referring to FIG. 2B, when the secondary system uses a secondary MS channel 253 unused by the primary system in the frequency band licensed to the primary system and the primary system uses primary MS channels 251 and 255 neighboring to the secondary MS channel 253, the secondary MS channel 253 causes ACI to the primary MS channels 251 and 255, especially severe ACI in frequency bands close to the secondary MS channel 253. If the ACI from the secondary MS channel 253 exceeds an interference threshold for the primary system, transmission/reception power needs to be decreased between the secondary BS and the secondary MS. Particularly, a power decrease is required in frequency bands of the secondary MS channel 253, close to the primary MS channels 251 and 255 and thus the secondary system decreases power stepwise in the vicinity of the primary MS channels 251 and 255. In addition, the secondary system needs to perform adaptive time spreading in order to maintain data transmission/reception performance between the secondary BS and the secondary MS.

The secondary MS requests a maximal power reduction value for application to the secondary MS channel 253 to the secondary BS. The secondary BS in turn requests to the primary BS the link margin of primary MSs that use the primary MS channels 251 and 255. The primary BS notifies the secondary BS of the link margin. Then the secondary BS determines the requested maximal power reduction value based on the link margin and notifies the secondary MS of the determined maximal power reduction value.

The secondary MS determines a subcarrier power allocation map for use in adaptive time spreading and power reduction using the maximal power reduction value and transmits the subcarrier power allocation map to the secondary BS.

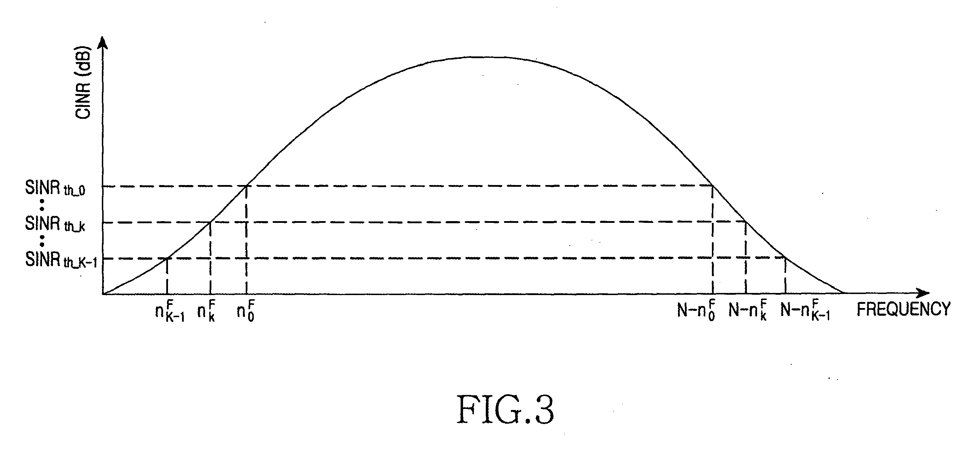

FIG. 3 illustrates a method for determining the adaptive frequency spreading parameter in the CR communication system according to the present invention.

Prior to the description of FIG. 3, it is made clear that as described before with reference to FIG. 2A, the secondary MS channel 203 suffers from severe ACI caused by the primary MS channels 201 and 205 and thus the CINR 210 between the secondary BS and the secondary MS rapidly decreases in the vicinity of the primary MS channels 201 and 205. Accordingly, a CINR measured by the secondary MS is used as a control variable by which to determine an adaptive frequency spreading parameter in the CR communication system according to the present invention.

Referring to FIG. 3, the graph represents the CINRs of the secondary MS channel when the primary MS channels reside at the sides of the upper and lower bands of the secondary MS channel. For better understanding, it is assumed that the upper and lower bands of the secondary MS channel experience the same ACI due to the primary MS channels. As stated earlier, the target BER performance for data transmission/reception between the secondary BS and the secondary MS is dependent on the threshold SINR, $SINR_{th}$. Although the BER performance increases with $SINR_{th}$, the resulting increase in the number of symbols spread by a modulation scheme, for example, Quadrature Phase Shift Keying (QPSK) or Quadrature Amplitude Modulation (QAM), leads to a decrease in throughput.

Therefore, a reference threshold SINR, $SINR_{th\_0}$ is defined as a minimal threshold SINR, $SINR_{th}$ required for achieving the target BER performance. A frequency spreading length is given as a power of *2*, $2^k$ (k=1, 2, 3, ... , K) where K is a logarithmic function of a maximal frequency spreading length with base 2, $\lceil log_2(MaximalFrequencySpreadingLength) \rceil$ ($\lceil \cdot \rceil$ represents rounding up). In FIG. 3, N denotes an Inverse Fast Fourier Transform (IFFT) size or a Fast Fourier Transform (FFT) size. Then, the threshold SINR, $SINR_{th}$ is expressed in Equation (1) as

$$SINR_{th\_k} = SINR_{th\_0} - 3 \cdot k [dB]$$

$$. . . . . (1)$$

where $SINR_{th\_k}$ denotes a threshold SINR for k of the frequency spreading length $2^k$. Thus, $SINR_{th}$ is defined as a set of threshold SINRs that are decreased by a factor of 3dB from the reference threshold SINR, $SINR_{th\_0}$. The CINR of an $i^{th}$ subcarrier is given in Equation (2) as

$$\gamma_i = \frac{P_i}{\eta_i + \sigma_i^2} \left| \hat{H}_i \right|^2$$

$$. . . . . (2)$$

where $\gamma_i$ denotes the CINR of the $i^{th}$ subcarrier, $P_i$ denotes the reception power of the $i^{th}$ subcarrier, $\eta_i$ denotes the interference power of the $i^{th}$ subcarrier, $\sigma_i^2$ denotes the Additive White Gaussian Noise (AWGN) of the $i^{th}$ subcarrier, and $\left| \hat{H}_i \right|^2$ denotes a channel gain estimate of the $i^{th}$ subcarrier.

In this manner, the number of subcarriers can be calculated using the threshold SINR, $SINR_{th}$ described in Equation (1) and the CINR of the $i^{th}$ subcarrier described in Equation (2). The number of subcarriers satisfies the following condition in Equation (3).

$$\gamma_i < SINR_{th\_k}$$

$$. . . . . (3)$$

Hence, the number of symbols spread by $2^k$ times by a modulation scheme such as QAM is computed in Equation (4) by

$$b_k^F = \left\lceil \frac{n_{k-1}^F - \sum_{j=0}^{K-k}\left(b_{(K-j+1)}^F \cdot 2^{(K-j)}\right)}{2^k} \right\rceil$$

$$. . . . . (4)$$

where k is K, K-1, ..., 1 and $\lceil \cdot \rceil$ represents rounding up. Here, it is assumed that $b_{K+1}^F = 0$. Since K is the largest parameter in frequency spreading, the number of the spread symbols, $b_K^F$ is first recursively calculated. $n_K^F$ denotes the number of subcarriers satisfying each threshold SINR, $SINR_{th}$. According to Equation (4), the adaptive frequency spreading parameter is determined in Equation (5) by

$$R^F = \left\{\left(2^k, b_k^F\right)\right\} \; for \; k = 0, 1, ..., K$$

$$. . . . . (5)$$

where $R^F$ denotes the frequency spreading parameter, $b_k^F$ denotes the number of symbols spread to a length of $2^k$ in the frequency domain as described in Equation (4), and $2^K$ denotes the longest frequency spreading length.

In accordance with the present invention, the secondary MS measures the ACI that the primary MS channels cause to the secondary MS channel, calculates a CINR using the ACI, calculates an adaptive frequency spreading parameter using the CINR, and then notifies the secondary BS of the adaptive frequency spreading parameter.

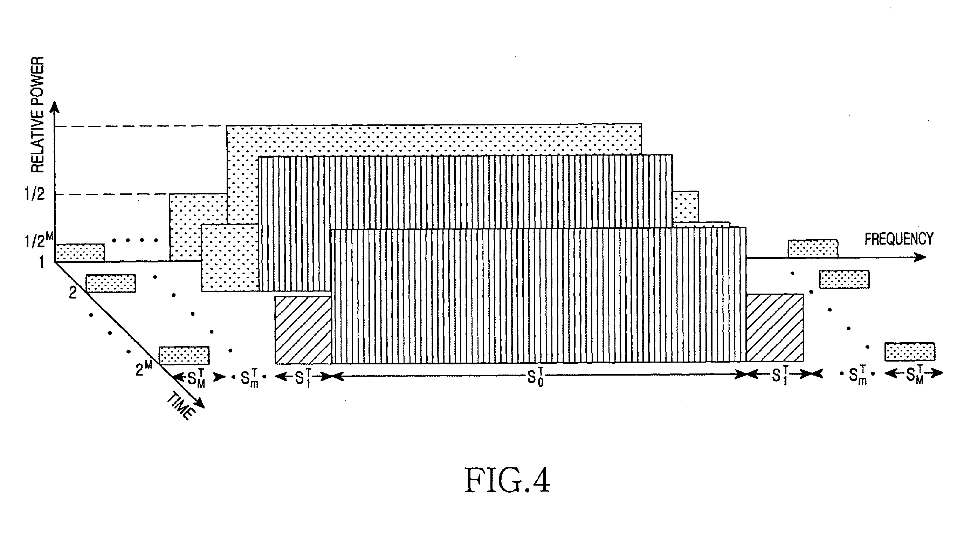

FIG 4 illustrates a method for determining the subcarrier power allocation map for adaptive time spreading and power reduction in the CR communication system according to the present invention.

Prior to the description of FIG. 4, it is made clear that as described with reference to FIG. 2B, the secondary MS channel 253 causes ACI to the primary MS channels 251 and 255, particularly severe ACI in frequency bands of the primary MS channels 251 and 255, close to the secondary MS channel 253. If the ACI from the secondary MS channel 253 is larger than the interference threshold of the primary system, data transmission/reception power needs to be decreased between the secondary BS and the secondary MS, particularly power reduction must be maximized. Accordingly, the secondary system requests a link margin to the primary system using the primary MS channels neighboring to the secondary MS channel and the primary system notifies the secondary system of its link margin in the CR communication system. Then, the secondary system calculates a maximal power reduction value requested by the secondary MS using the link margin. The secondary MS determines a subcarrier power allocation map for adaptive time spreading and power control using the maximal power reduction value and notifies the secondary BS of the subcarrier power allocation map. That is, the maximal power reduction value is used as a control variable for determining the subcarrier power allocation map.

FIG. 4 illustrates power levels for data transmission/reception between the secondary BS and the secondary MS when the secondary system uses a secondary MS channel unused by the primary system, as illustrated in FIG. 2B. Assuming that the secondary MS channel causes the same ACI to the primary MS channels, the graph illustrated in FIG. 4 demonstrates time spreading and maximal power reduction in the secondary MS channel and the primary MS channels adjacent to the secondary MS channel. Hence, FIG. 4 shows relative power levels of the primary MS channels with respect to the power level of the secondary MS channel, i.e. the power level of a frequency band $S_0^T$ assumed to be 1, that is, the maximal power decrease of the primary MS channels with respect to the power of the secondary MS channel assumed to be a maximal power level. The primary MS channels reside at both sides of $S_0^T$, starting from frequency bands $S_1^T$ having a half of the power level of $S_0^T$.

Specifically, the primary MS channels suffer from ACI due to the secondary MS channel. If the ACI is larger than the interference threshold of the primary system, data transmission/reception power must be decreased between the secondary BS and the secondary MS, particularly power must be decreased in frequency bands of the secondary MS channel, close to the primary MS channels so as not to affect the data transmission/reception performance of the primary system. Notably, the secondary system stepwise decreases the power of the frequency bands close to the primary MS channel. Also, the secondary system needs adaptive time spreading in order to keep the data transmission/reception performance between the secondary BS and the secondary MS.

Therefore, the secondary system decreases power in the primary MS channels, stepwise by $2^m$ (m=1, 2, 3, ..., M) from the maximal power of the secondary MS channel. If the power should be dropped to $\dfrac{1}{2^m}$ in the primary MS channels, M is defined as a logarithmic function of the maximal power reduction value, $\lceil log_2(MaximalPower\ Reduction\ Value)\rceil$ for the primary MS channels. Therefore, $S_m^T$ is the number of subcarriers for which power is to be decreased by $2^m$ from the maximal power of the secondary MS channel, i.e. the number of subcarriers at a power level of $\dfrac{1}{2^m}$ in the primary MS channel with respect to the maximal power of the secondary MS channel.

In conjunction with the stepwise power reduction, the secondary system spreads transmission data in time, that is, in reverse proportion to the power decrease. A time spreading length is defined as $2^m$ (m=1, 2, 3, ... , M) where M is $\lceil log_2\ (MaximalPower\ Reduction\ Value)\rceil$. Thus, the subcarrier power allocation map for adaptive time spreading and power reduction is expressed in Equation (6) as

$$R^T = \left\{\left(2^m, S_m^T\right)\right\} \ for\ m = 0, 1, ..., M$$

$$.\ .\ .\ .\ .\ (6)$$

where $R^T$ denotes the subcarrier power allocation map, $S_m^T$ denotes the number of subcarriers for which power is to be reduced from a maximal power to $\dfrac{1}{2^m}$, and $2^M$ denotes the maximal power reduction value. In this manner, the subcarrier power allocation map is determined according to the maximal power reduction.

In the CR communication system as described above, the secondary MS calculates a maximal power reduction value in the primary MS channels with respect to the maximal power of the secondary MS channel, determines a subcarrier allocation map for adaptive time spreading and power reduction according to the maximal power reduction value, and transmits the subcarrier power allocation map to the secondary BS. Therefore, data with a power of $\dfrac{1}{2^m}$ with respect to the maximal power of the secondary MS channel is spread to a time spreading length of $2^m$ in the primary MS channels. A receiver combines the spread data after the time spreading period of $2^m$. This data combining leads to the same power gain as that of data without power reduction.

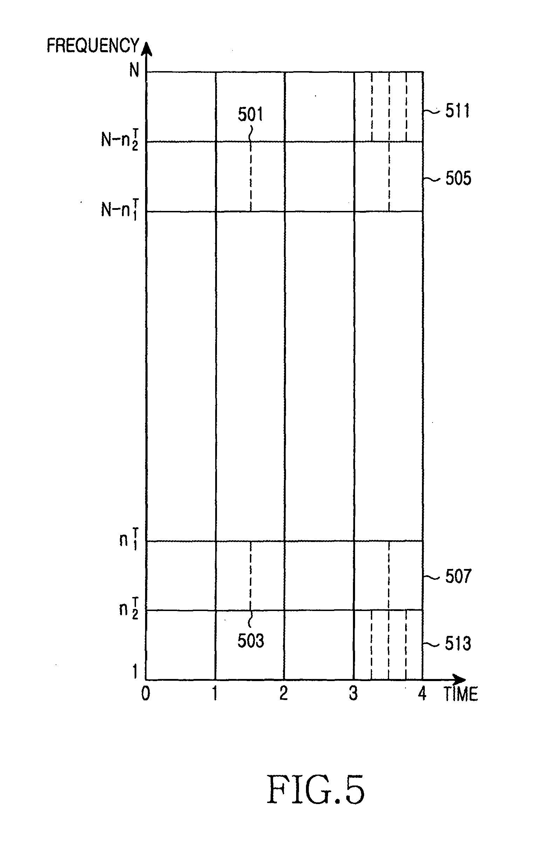

FIG. 5 illustrates data combining based on the subcarrier power allocation map in the CR communication system according to the present invention.

Referring to FIG. 5, data that is time-spread in accordance with a power reduction value in the primary MS channels, i.e. a power decrease from the maximal power of the secondary MS channel to $\dfrac{1}{2^m}$ is combined after the time spreading length. The combined data has the same reception gain as that of data whose power is not reduced.

For example, data 501, 503, 505 and 507 which are time-spread for 2T in accordance with a half decrease from the maximal power of the secondary MS channel are combined 2T later. Data 511 and 513 which are time-spread for 4T in accordance with a decrease from the maximal power of the secondary MS channel to 1/4 are combined 4T later. As previously described, the combined data has a reception gain equal to that of data without power reduction.

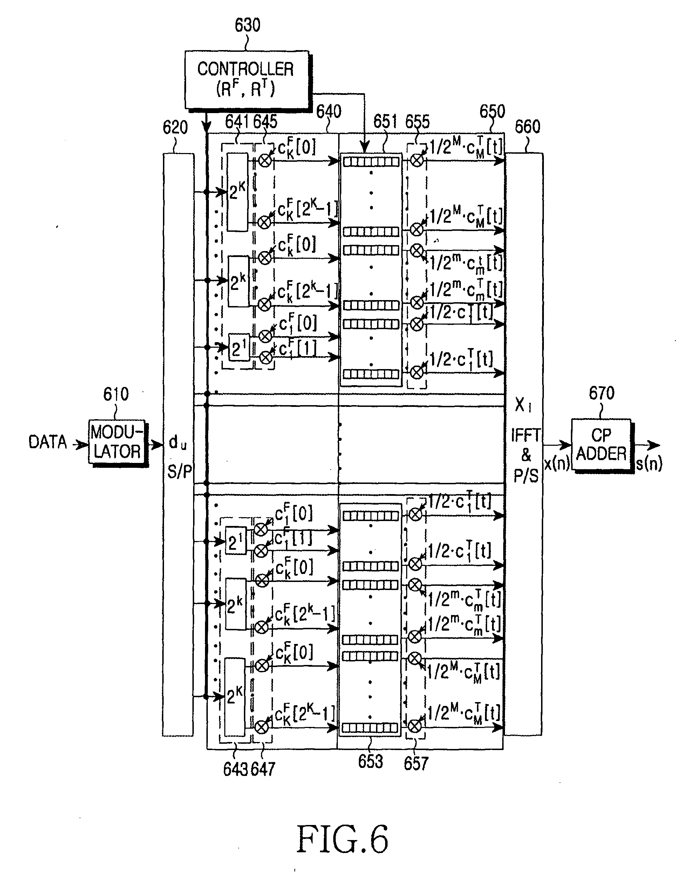

FIG. 6 illustrates a transmitter in the CR communication system according to the present invention. It is assumed herein that the afore-described receiver, for example an MS, determines an adaptive frequency spreading parameter and a subcarrier power allocation map for adaptive time spreading and power reduction and the transmitter, for example a BS, receives the adaptive frequency spreading parameter and the subcarrier power allocation map from the MS. With reference to FIG. 6, the configuration of the transmitter and transmission from the transmitter to the receiver will be described below.

Subsequently, a description will be made of the configuration of the receiver and reception from the transmitter at the receiver in the CR communication system. The transmission and reception of the adaptive frequency spreading parameter and the subcarrier power allocation map have been described before and thus will not described herein.

Referring to FIG. 6, the transmitter includes a modulator 610 for modulating transmission data in a predetermined modulation scheme such as QAM or QPSK, a first converter 620 for converting serial modulated data to parallel data, a first spreader 640 for frequency-spreading the parallel data using an adaptive frequency spreading parameter received from the receiver, a second spreader 650 for performing time spreading and power reduction on the frequency-spread data using a subcarrier power allocation map, a second converter 660 for IFFT-processing the time-spread and power-reduced data and converting parallel IFFT data to serial data, a Cyclic Prefix (CP) adder 670 for adding a CP to the serial data, and a controller 630 for storing the adaptive frequency spreading parameter and the subcarrier power allocation map and controlling the first and second spreaders 640 and 650 by use of the adaptive frequency spreading parameter and the subcarrier power allocation map. The adaptive frequency spreading parameter is defined as Equation (5) and the subcarrier power allocation map is defined as Equation (6).

In operation, the first converter 620 converts the serial modulation symbols received from the modulator 610 to parallel symbols $d_u$. For the input of the parallel symbols from the first converter 620 and the adaptive frequency spreading parameter, $R^F$ of Equation (5) from the controller 630, frequency spreaders 641 and 643 in the first spreader 640 repeatedly allocate the parallel symbols $d_u$ to as many subcarriers as the frequency spreading length $2^k$ (k=1, 2, 3, ... , K) of the adaptive frequency spreading parameter. Therefore, the parallel symbols $d_u$ are spread across $2^k$ subcarriers in frequency. The number of symbols spread to $2^k$ in frequency is $b_k^F$ in Equation (5).

Orthogonal sequence generators 645 and 647 in the first spreader 640 multiply the frequency-spread symbols by a frequency spreading code of length $2^k$. That is, the orthogonal sequence generators 645 and 647 each include a plurality of multipliers and each multiplier multiplies the input symbols by a frequency spreading code given in Equation (7) as

$$C_k^F = \left[ c_k^F[0], c_k^F[1], ..., c_k^F[2^k - 1] \right]$$

$$..... (7)$$

Since the CR communication system operates in OFDM/OFDMA, the spreading code $C_k^F$ is an orthogonal binary Hadamard sequence.

The spread symbols are provided to the second spreader 650, during which time the controller 630 transmits the subcarrier power allocation map $R^T$ described in Equation (6) to the second spreader 650. Buffers 651 and 653 of the second spreader 650 repeatedly buffer the spread symbols in proportion to a frequency-spread power reduction value according to $S_m^T$ of the subcarrier power allocation map and provide the buffered symbols to power reducers 655 and 657. That is, the buffers 651 and 653 repeatedly buffer the received symbols according to the number of subcarriers which are time-spread to $2^m$ based on $S_m^T$. Hence, the symbols provided to the second spreader 650 are spread to $2^m$ in time.

The power reducers 655 and 657 each include a plurality of multipliers which multiply received symbols by a maximal power reduction value, i.e. a power reduction factor $\frac{1}{2^m}$ of the subcarrier power allocation map and a simple code defined in Equation (8) as

$$c_m^T[t] = \{\pm 1\} \ for \ t = 0, 1, ..., 2^m - 1$$

$$..... (8)$$

where the simple code $c_m^T$ has a value of +1 or -1 at a given time instant. Thus, the power reducers 655 and 657 reduce the maximal power according to $2^m$ set in the subcarrier power allocation map by multiplying the symbols time-spread to $2^m$ by the power reduction factor $\frac{1}{2^m}$ and the code $c_m^T$.

As described above, a modulation symbol $d_u$ from the modulator 610 is frequency-spread according to the adaptive frequency spreading parameter in the first spreader 640 and processed by time spreading and power reduction according to the subcarrier power allocation map in the second spreader 650. Then, the time-spread and power-reduced symbol is provided to the second converter 660. An ith subcarrier provided to the second converter 660 can be expressed in Equation (9) as

$$X_i = d_u \cdot c_k^F [\cdot] \cdot c_m^T [\cdot] \cdot \frac{1}{2^m}, \quad \text{for } i = 0, 1, \ldots, N-1$$

$$\ldots \ldots (9)$$

As described in Equation (9), the modulation symbol $d_u$ from the modulator 610 is multiplied by the spreading code $c_k^F$ in the orthogonal sequence generators 645 and 647 of the first spreader 640 and then multiplied by the code $c_m^T$ and the power reduction factor $\frac{1}{2^m}$ in the power reducers 655 and 657 of the second spreader 650. The resulting symbol is provided to the second converter 660.

In Equation (9), N is an IFFT size and u, k and m are defined as follows.

If i of the ith subcarrier is equal to or less than $\frac{N}{2}$ and the condition described as Equation (10) is satisfied, k associated with frequency spreading on the ith subcarrier becomes p.

$$\sum_{j=0}^{K-p} 2^{K-j+1} \cdot b_{K-j+1}^F \leq i < \sum_{j=0}^{K-p} 2^{K-j} \cdot b_{K-j}^F$$

$$\ldots \ldots (10)$$

If i is larger than $\frac{N}{2}$ and the condition described in Equation (11) is satisfied, k becomes p.

$$N - \sum_{j=0}^{K-p} 2^{K-j} \cdot b_{K-j}^F \leq i < N - \sum_{j=0}^{K-p} 2^{K-j+1} \cdot b_{K-j+1}^F$$

$$\ldots \ldots (11)$$

For the ith subcarrier, u is determined in Equation (12) by

$$u = \begin{cases} \left\lceil \dfrac{i - 2^{k+1} \cdot b_{k+1}^F}{2^k} \right\rceil + b_{k+1}^F & \text{for } i \leq \dfrac{N}{2} \\[3ex] N_b - 1 - \left\lceil \dfrac{i - 2^{k+1} \cdot b_{k+1}^F}{2^k} \right\rceil + b_{k+1}^F & \text{for } i > \dfrac{N}{2} \end{cases}$$

$$\ldots \ldots (12)$$

where $N_b$ is expressed as Equation (13).

$$N_b = b_0^F + 2 \cdot \sum_{j=1}^{K} b_j^F$$

$$\ldots \ldots (13)$$

If i is equal to or less than $\dfrac{N}{2}$ and the condition described in Equation (14) is satisfied, a parameter m for time spreading and power control of the $i^{th}$ subcarrier becomes q.

$$\sum_{j=0}^{M-q} S_{M-j+1}^T \le i < \sum_{j=0}^{M-q} S_{M-j}^T$$

$$\ldots \ldots (14)$$

If i is larger than $\dfrac{N}{2}$ and the condition described in Equation (15) is satisfied, m becomes q.

$$N - \sum_{j=0}^{M-q} S_{M-j}^T \le i < N - \sum_{j=0}^{M-q} S_{M-j+1}^T$$

$$\ldots \ldots (15)$$

The second converter 660 IFFT-processes the received symbols and converts parallel IFFT data to serial data. After the IFFT, the output samples x(n) are given in Equation (16) as

$$x(n) = \frac{1}{\sqrt{N}} \sum_{i=0}^{N-1} X_i \cdot e^{j2\pi(in/N)} \qquad for \ n = 0, 1, 2, \ldots, N-1$$

$$\ldots \ldots (16)$$

The CP adder 670 adds a CP to the data described as Equation (16) and transmits the CP-added data s(n) to the receiver. In Equation (17),

$$s(n) = \frac{1}{\sqrt{N}} \sum_{i=0}^{N-1} X_i \cdot e^{j2\pi(in/N)} \qquad for \ n = -N_g, \ldots, N-1$$

$$\ldots \ldots (17)$$

where Ng denotes a CP length. Let a Channel Impulse Response (CIR) length be denoted by L (L is a finite value). Then, if L is shorter than Ng, an $n^{th}$ sample s(n) from the CP adder 670 is defined as Equation (17).

As described above, the transmitter receives an adaptive frequency spreading parameter and a subcarrier power allocation map from the receiver and stores them in the controller 630. Then the transmitter frequency-spreads symbols modulated in a modulation scheme with the adaptive frequency spreading parameter, processes the frequency-spread symbols by time spreading and power reduction using the subcarrier power allocation map, IFFT-processes the time-spread and power-reduced symbols, adds a CP to the IFFT signal and transmits the CP-added signal. The frequency spreading and the time spreading and power reduction prevent ACI between the secondary MS channel and the primary MS channels.

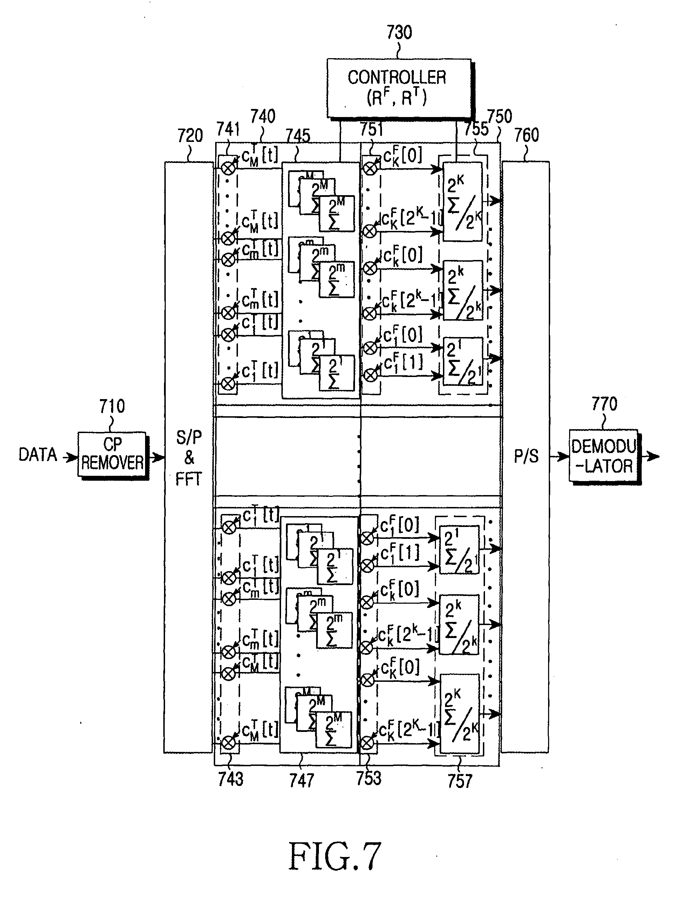

FIG. 7 illustrates the receiver in the CR communication system according to the present invention. As described above, the receiver transmits the adaptive frequency spreading parameter and the subcarrier power allocation map to the transmitter and receives data from the transmitter based on the adaptive frequency spreading parameter and the subcarrier power allocation map.

Referring to FIG. 7, the receiver includes a CP remover 710 for removing a CP from received data, a first converter 720 for converting the CP-free serial data to parallel data and FFT-processing the parallel data, a first despreader 740 for time-despreading the FFT data and combining the time-spread data according to the subcarrier power allocation map, a second despreader 750 for frequency-despreading the combined data according to the adaptive frequency spreading parameter, a second converter 760 for converting the frequency-despread parallel data to serial data, a demodulator 770 for demodulating the serial data in accordance with the modulation scheme used in the transmitter, and a controller 730 for storing the adaptive frequency spreading parameter and the subcarrier power allocation map and controlling the first and second despreaders 740 and 750 using the adaptive frequency spreading parameter and the subcarrier power allocation map. The controller 730 operates as the counterpart of the controller 630 illustrated in FIG. 6. Accordingly, the first despreader 740 operates in accordance with the second spreader 650 of the transmitter and the second despreader 750 operates in accordance with the first spreader 640 of the transmitter.

The CP remover 710 removes a CP added by the CP adder 670 of the transmitter from the received data. An $n$th sample, $y_n$ in the CP-free data is given in Equation (18) as

$$y(n) = x(n) * h(n) + l(n) + w(n)$$

$$\ldots \ldots (18)$$

where * represents convolution, $h(n)$ denotes a CIR, $l(n)$ denotes ACI from the primary MS channels, and $w(n)$ denotes AWGN. The first converter 720 converts the CP-free serial data to parallel data and FFT-processes the parallel data. The FFT data on an $i$th subcarrier is expressed in Equation (19) as

$$Y_i = X_i \cdot H_i + L_i + W_i$$

$$\ldots \ldots (19)$$

where $X_i$, $H_i$, $L_i$ and $W_i$ are frequency-domain representations of $x(n)$, $h(n)$, $l(n)$, and $w(n)$. As previously described herein, the secondary MS, i.e. the receiver calculates the CINR of the $i$th subcarrier by Equation (2) and determines an adaptive frequency spreading parameter using the CINR by Equation (5), and transmits the adaptive frequency spreading parameter to the transmitter, while storing it in the controller 730.

The controller 730 provides a stored subcarrier power allocation map, $R^T$ defined as Equation (6) to the first spreader 740. Coders 741 and 743 of the first despreader 740 each have a plurality of multipliers which multiply the received data by the code $C_k^F$ defined as Equation (8) as done in the power reducers 655 and 657 of the transmitter. Then, combiners 745 and 747 combine the multiplied data during a time spreading length of $2^m$ according to the subcarrier power allocation map. The data combining has been described before with reference to FIG. 5, so its description will not be provided at this time.

The second spreader 750 includes a plurality of orthogonal sequence generators 751 and 753 that multiply the data combined for the time spreading length of $2^m$ by the frequency spreading code $C_k^F$ defined as Equation (7). As previously described, $C_k^F$ is an orthogonal binary Hadamard sequence because the CR communication system operates in OFDM/OFDMA.

Summers 755 and 757 of the second despreader 750 sum the data multiplied by $C_k^F$ on a basis of the frequency spreading length $2^k$ of the adaptive frequency spreading parameter and divide the sum by $2^k$. The second converter 760 converts the parallel data received from the second despreader 750 to serial data and the demodulator 770 demodulates the serial data in accordance with the modulation scheme of the transmitter.

As described above, the receiver of the CR communication system determines an adaptive frequency spreading parameter and a subcarrier power allocation map for time spreading and power reduction and transmits them to the transmitter, while storing them internally. Upon receipt of data frequency-spread based on the adaptive frequency spreading parameter and time-spread and power-reduced based on the subcarrier power allocation map from the transmitter, the receiver processes the received data by frequency despreading using the adaptive frequency spreading parameter and time despreading and data combining using the subcarrier power allocation map. Therefore, due to the reception of the frequency-spread, time-spread and power-reduced data, the receiver avoids ACI between the primary MS channels and the secondary MS channel.

As is apparent from the foregoing description, data transmission/reception using an adaptive frequency spreading parameter, an adaptive time spreading parameter and a subcarrier power allocation map prevents ACI between primary MS channels and a secondary MS channel. Therefore, system performance is increased.

While the invention has been shown and described with reference to certain exemplary embodiments of the present invention thereof, it will be understood by those skilled in the art that various changes in form and details may be made therein without departing from the spirit and scope of the present invention as defined by the appended claims and their equivalents.

**Claims**

1. A method for transmitting and receiving data in a communication system having a first system for providing a communication service in a first frequency band and a second system for providing a communication service in a second frequency band different from the first frequency band, the method comprising:

measuring a first channel interference that the first frequency band causes to the second frequency band; determining a frequency spreading parameter according to the first channel interference; measuring a second channel interference that the second frequency band causes to the first frequency band; receiving link information from the first system according to the second channel interference and determining a power allocation map according to the link information; and transmitting and receiving data according to the frequency spreading parameter and the power allocation map.

2. The method of claim 1, wherein the first system is authorized to use the first and second frequency bands and the second system is not authorized to use the first and second frequency bands.

3. The method of claim 1, wherein the determination of the frequency spreading parameter further comprises calculating the Carrier-to-Interference and Noise Ratio (CINR) of each subcarrier in the second frequency band according to the first channel interference.

4. The method of claim 3, wherein the determination of the frequency spreading parameter further comprises calculating a threshold Signal-to-Interference and Noise Ratio (SINR) for the each subcarrier using the CINR of the each subcarrier.

5. The method of claim 4, wherein the calculation of the threshold SINR comprises defining a plurality of threshold SINRs based on a reference threshold SINR according to frequency spreading lengths.

6. The method of claim 5, wherein the reference threshold SINR is a minimal threshold SINR required for achieving a target Bit Error Rate (BER) for data transmission and reception in the second system.

7. The method of claim 5, wherein each of the frequency spreading lengths is a power of 2 ($2^k$, k=1, 2, 3, ..., K) where K is a logarithmic function of a maximal frequency spreading length with base 2.

8. The method of claim 7, wherein the determination of the frequency spreading parameter further comprises determining a frequency spreading length and the number of symbols spread to the frequency spreading length.

9. The method of claim 8, wherein the determination of the number of spread symbols comprises determining the number of the spread symbols according to the number of subcarriers satisfying a threshold SINR.

10. The method of claim 1, wherein the reception of the link information comprises requesting a link margin to the first system if the second channel interference is larger than an interference threshold of the first system and receiving the link information including the link margin from the first system.

11. The method of claim 1, wherein the determination of the power allocation map comprises determining a power reduction value for the first frequency band with respect to a power level of the second frequency band according to the received link information.

12. The method of claim 11, wherein the determination of the power reduction value comprises determining the power reduction value stepwise to be $\dfrac{1}{2^m}$ of the power level of the second frequency band, where M is a logarithmic function of a maximal power reduction value with base 2.

13. The method of claim 11, wherein the determination of the power allocation map further comprises determining a time spreading length according to the power reduction value for the first frequency band.

14. The method of claim 13, wherein the time spreading length is a power of 2 ($2^m$, m=1, 2, 3, ..., M), where M is a logarithmic function of a maximal power reduction value with base 2.

15. The method of claim 13, wherein the determination of the power allocation map comprises determining the time spreading length and determining the number of subcarriers for which power is reduced for the time spreading length.

16. The method of claim 1, wherein the data transmission and reception comprises, upon generation of data to be sent in the second frequency band, frequency-spreading the data according to the determined frequency spreading parameter and processing the frequency-spread data by time spreading and power reduction according to the power allocation map.

17. The method of claim 16, wherein the frequency spreading comprises spreading the data to a frequency spreading length included in the frequency spreading parameter and multiplying the frequency-spread data by a spreading code.

18. The method of claim 17, wherein the spreading of the data to the frequency spreading length comprises allocating the data repeatedly to as many subcarriers as the frequency spreading length.

19. The method of claim 17, wherein the spreading code is an orthogonal binary Hadamard sequence.

20. The method of claim 17, wherein the frequency spreading comprises modulating the data in a modulation scheme, converting the modulated data to parallel data, and spreading the parallel data to a frequency spreading length included in the frequency spreading parameter.

21. The method of claim 16, wherein the time spreading and power reduction comprises repeatedly storing the frequency-spread data according to a time spreading length included in the power allocation map and the number of subcarriers for which power is reduced for the time spreading length.

22. The method of claim 21, wherein the time spreading and power reduction further comprises reducing the power of the repeatedly stored data for the time spreading length.

23. The method of claim 22, wherein the data transmission and reception comprises processing the power-reduced data by Inverse Fast Fourier Transform (IFFT), converting the IFFT data to serial data, adding a Cyclic Prefix (CP) to the serial data, and transmitting the CP-added data to a receiver of the second system.

24. The method of claim 1, wherein the data transmission and reception comprises, upon receipt of data in the second frequency band, time-despreading the received data and combining the time-despread data according to the power allocation map, and frequency-despreading the combined data according to the frequency spreading parameter.

25. The method of claim 24, wherein the time despreading and combining comprises combining the received data for a time spreading length included in the power allocation map.

26. The method of claim 25, wherein the combining of the received data comprises combining the received data after a time equal to the time spreading length according to a power decrease from the power of the second frequency band for the time spreading length.

27. The method of claim 24, wherein the time despreading and combining comprises removing a CP from the received data, converting the CP-removed data to parallel data, processing the parallel data by Fast Fourier transform (FFT), time-despreading the FFT data and combining the time-despread data.

28. The method of claim 24, wherein the frequency despreading using the frequency spreading parameter comprises multiplying the time-despread and combined data by a spreading code and frequency-despreading the multiplied data to a frequency spreading length included in the frequency spreading parameter.

29. The method of claim 28, wherein the frequency despreading comprises summing the multiplied data for the frequency spreading length and dividing the sum by the frequency spreading length.

30. The method of claim 28, wherein the spreading code is an orthogonal binary Hadamard sequence.

31. The method of claim 28, wherein the data transmission and reception comprises converting the frequency-despread data to serial data and demodulating the serial data in a predetermined method.

32. A system for transmitting and receiving data in a communication system having a first system for providing a communication service in a first frequency band and a second system for providing a communication service in a second frequency band different from the first frequency band, the system comprising:

the second system for measuring a first channel interference that the first frequency band causes to the second frequency band, determining a frequency spreading parameter according to the first channel interference, measuring a second channel interference that the second frequency band causes to the first frequency band, receiving link information from the first system according to the second channel interference and determining a power allocation map according to the link information, and transmitting and receiving data according to the frequency spreading parameter and the power allocation map.

33. The system of claim 32, wherein the first system is authorized to use the first and second frequency bands and the second system is not authorized to use the first and second frequency bands.

34. The system of claim 32, wherein the second system calculates the Carrier-to-Interference and Noise Ratio (CINR) of each subcarrier in the second frequency band according to the first channel interference.

35. The system of claim 34, wherein the second system calculates a threshold Signal-to-Interference and Noise Ratio (SINR) for the each subcarrier using the CINR of the each subcarrier and determines the frequency spreading parameter using the threshold SINRs.

36. The system of claim 35, wherein the second system defines a plurality of threshold SINRs based on a reference threshold SINR according to frequency spreading lengths.

37. The system of claim 36, wherein the reference threshold SINR is a minimal threshold SINR required for achieving a target Bit Error Rate (BER) for data transmission and reception in the second system.

38. The system of claim 36, wherein each of the frequency spreading lengths is a power of 2 ($2^k$, k=1, 2, 3, ..., K) where K is a logarithmic function of a maximal frequency spreading length with base 2.

39. The system of claim 38, wherein the second system determines the frequency spreading parameter by determining a frequency spreading length and the number of symbols spread to the frequency spreading length.

40. The system of claim 39, wherein the second system determines the number of the spread symbols according to the number of subcarriers satisfying a threshold SINR.

41. The system of claim 32, wherein the second system requests a link margin to the first system if the second channel interference is larger than an interference threshold of the first system and receives the link information including the link margin from the first system.

42. The system of claim 32, wherein the second system determines a power reduction value for the first frequency band with respect to a power level of the second frequency band according to the received link information.

43. The system of claim 42, wherein the second system determines the power reduction value stepwise to be $\dfrac{1}{2^m}$ of the power level of the second frequency band, where M is a logarithmic function of a maximal power reduction value with base 2.

**44.** The system of claim 42, wherein the second system determines the power allocation map by determining a time spreading length according to the power reduction value for the first frequency band.

**45.** The system of claim 44, wherein the time spreading length is a power of 2 ($2^m$, m=1, 2, 3, ..., M), where M is a logarithmic function of a maximal power reduction value with base 2.

**46.** The system of claim 44, wherein the second system determines the power allocation map by determining the time spreading length and the number of subcarriers for which power is reduced for the time spreading length.

**47.** The system of claim 32, wherein the second system comprises a transmitter having a first spreader for, upon generation of data to be sent in the second frequency band, frequency-spreading the data according to the determined frequency spreading parameter and a second spreader for processing the frequency-spread data by time spreading and power reduction according to the power allocation map.

**48.** The system of claim 47, wherein the first spreader performs the frequency spreading by spreading the data to a frequency spreading length included in the frequency spreading parameter and multiplying the frequency-spread data by a spreading code.

**49.** The system of claim 48, wherein the first spreader spreads the data to the frequency spreading length by allocating the data repeatedly to as many subcarriers as the frequency spreading length.

**50.** The system of claim 48, wherein the spreading code is an orthogonal binary Hadamard sequence.

**51.** The system of claim 48, wherein the transmitter further comprises a modulator for modulating the data in a modulation scheme and a first converter for converting the modulated data to parallel data and providing the parallel data to the first spreader.

**52.** The system of claim 47, wherein the transmitter further comprises a second spreader for repeatedly storing the frequency-spread data according to a time spreading length included in the power allocation map and the number of subcarriers for which power is reduced for the time spreading length.

**53.** The system of claim 52, wherein the second spreader reduces the power of the repeatedly stored data for the time spreading length.

**54.** The system of claim 53, wherein the transmitter further comprises a second converter for processing the power-reduced data by Inverse Fast Fourier Transform (IFFT), a third converter for converting the IFFT data to serial data, and a Cyclic Prefix (CP) adder for adding a CP to the serial data and transmitting the CP-added data to a receiver of the second system.

**55.** The system of claim 32, wherein the second system comprises a receiver having a first despreader for, upon receipt of data in the second frequency band, time-despreading the received data and combining the time-despread data according to the power allocation map, and a second despreader for frequency-despreading the time-despread and combined data according to the frequency spreading parameter.

**56.** The system of claim 55, wherein the first despreader combines the received data for a time spreading length included in the power allocation map.

**57.** The system of claim 56, wherein the first despreader combines the received data after a time equal to the time spreading length according to the a power decrease from a power of the second frequency band during the time spreading length.

**58.** The system of claim 55, wherein the receiver further comprises a remover for removing a CP from the received data, a first converter for converting the CP-removed data to parallel data, and a second converter for processing the parallel data by Fast Fourier transform (FFT) and providing the FFT data to the first despreader.

**59.** The system of claim 55, wherein the second despreader multiplies the time-despread and combined data by a spreading code and frequency-despreads the multiplied data to a frequency spreading length included in the frequency spreading parameter.

**60.** The system of claim 59, wherein the second despreader sums the multiplied data for the frequency spreading length and divides the sum by the frequency spreading length.

**61.** The system of claim 59, wherein the spreading code is an orthogonal binary Hadamard sequence.

**62.** The system of claim 59, wherein the receiver further comprises a third converter for converting the data despread to the frequency spreading length to serial data and a demodulator for demodulating the serial data in a demodulating method.

FIG.1

FIG.2A

FIG.2B

FIG.3

EP 1 841 252 A2

FIG.4

FIG.5

FIG.6

FIG.7